# EUROPEAN PATENT APPLICATION

(11) **EP 3 825 147 A1**
(43) Date of publication of application: **26.05.2021**
(21) Application number: 20208181.6
(22) Date of filing: 17.11.2020
(51) Int. Cl.: B60C 1/00, C08K 3/04, C08K 5/548, C08K 9/06

(54) **RUBBER COMPOSITION COMPRISING A SURFACE-FUNCTIONALIZED CARBON ALLOTROPE AND TIRE**

(30) Priority: 22.11.2019 US 201916691811
(71) Applicant: The Goodyear Tire & Rubber Company, Akron, OH 44316 (US)
(72) Inventor: DENNIS-PELCHER, Robert Vincent, Uniontown, OH 44685 (US)
(74) Representative: Goodyear IP Law

(57) **Abstract**

A vulcanizable rubber composition for use in a pneumatic tire is disclosed. The rubber composition comprises, based on parts by weight per 100 parts by weight elastomer (phr): 100 phr of at least one diene-based elastomer; from 20 to 80 phr of a carbon black; from 0 to 40 phr of a silica; from 1 to 10 phr of a surface-functionalized carbon allotrope selected from the group consisting of carbon nanotubes, graphene, and fullerenes; and from 50 to 300 parts by weight of a sulfur-containing organosilane per 100 parts by weight of the surface-functionalized carbon allotrope.

## Description

### Background

Rubber compositions containing diene-based elastomers often contain reinforcing fillers such as for example rubber reinforcing carbon black and precipitated silica together with a coupling agent for the precipitated silica. Rubber tires may contain at least one component comprised of such rubber composition.

Sometimes it may be desirable to provide a rubber composition containing an alternative reinforcing filler.

For example, such additional, or alternative, reinforcing filler may be in a form of graphene, carbon nanotubes or fullerenes.

Graphene, carbon nanotubes and fullerenes may exhibit exceptional mechanical and electrical properties that make them very interesting for the use in rubber compositions including for tire components. However, in order to benefit from the advantages of graphene or carbon nanotubes, it is important for a high level of their dispersion in their associated rubber be promoted. Such dispersion is generally a challenge because graphene sheets tend to stack together, exfoliated graphene platelets tend to agglomerate and carbon nanotubes tend to from entangled aggregates to thereby form restricted dispersions in the rubber composition and thereby weak interfacial interactions with diene-based elastomers in the rubber composition.

Therefore, it is recognized that more effective dispersions of graphene, carbon nanotubes and fullerenes in rubber compositions containing diene-based elastomer is desired.

### Summary of the Invention

The invention relates to a rubber composition in accordance with claim 1 and to a tire in accordance with claim 14.

Dependent claims refer to preferred embodiments of the invention.

In one aspect, the present invention is directed to a vulcanizable rubber composition comprising, based on parts by weight per 100 parts by weight elastomer (phr) :
100 phr of at least one diene-based elastomer;
from 20 to 80 phr of a carbon black;
from 0 to 40 phr of a silica;
from 1 to 10 phr of a surface-functionalized carbon allotrope; and
from 50 to 300 parts by weight of a sulfur-containing organosilane per 100 parts by weight of the surface-functionalized carbon allotrope.

In another aspect, the invention is further directed to a pneumatic tire comprising the vulcanizable rubber composition.

### Brief Description of the Drawings

The invention will be described by way of example and with reference to the accompanying drawings in which:
FIG. 1 shows data for G' and rebound for several rubber compounds (C1, C2, C3, E1, C4, C5, E2 and E3, from left to right);
FIG. 2 shows data for G' and tan delta for several rubber compounds (C1, C2, C3, E1, C4, C5, E2 and E3, from left to right);
FIG. 3 shows data for G' and abrasion rate for several rubber compounds (C1, C2, C3, E1, C4, C5, E2 and E3, from left to right); and
FIG. 4 shows data for tear strength for several rubber compounds (C1, C2, C3, E1, C4, C5, E2 and E3, from left to right).

### Description of Example Embodiments of the Invention

Previously, when using carbon nanotubes or graphene in compounds it was clear that the polymer-filler interaction was poor leading to sub-par performance properties. In order to improve the interaction in the present approach, silane was added along with surface functionalized carbon nanotubes to allow for coupling to the polymer. The included data shows clearly that with the combination of the silane and the surface functionalized carbon nanotubes, the stiffness of the compound is increased while reducing hysteresis. In the end this technology allows for breaking the usual wear-stiffness-hysteresis-tear-wet tradeoffs.

Many carbon based nanomaterials such as graphene, carbon nanotubes, unique carbon allotropes, fullerenes, or any combination thereof are prepared/synthesized or post treated with hydroxyl and carboxylic acid functionality, just to name a few groups as examples. The polar functionality makes it difficult to disperse and "wet" the filler material with the polymer, along the same lines as uncoupled silica. By utilizing silane coupling agents the linkage and interaction between filler and polymer can be dramatically improved. The improved interaction of the filler with the rubber improves dispersion, decreases filler-filler networking, increases polymer-filler networking, reduces hysteresis, improves abrasion resistance and tear properties for the compound thereby breaking traditional tire tradeoffs such as rolling resistance/tread wear, etc. and improving tire reinforcement.

This invention is unique due to the combination of carbon nanofillers with silane coupling. This combination in the compound formulation, even without silica, may impart significantly improved interaction between the functionalized carbon filler and the polymer.

There is disclosed then a vulcanizable rubber composition comprising, based on parts by weight per 100 parts by weight elastomer (phr):
100 phr of at least one diene-based elastomer;
from 20 to 80 phr of a carbon black;
from 0 to 40 phr of a silica;
from 1 to 10 phr of a surface-functionalized carbon allotrope; and
from 50 to 300 parts by weight of a sulfur-containing organosilane per 100 parts by weight of the surface-functionalized carbon allotrope.

There is further disclosed a pneumatic tire comprising the vulcanizable rubber composition.

The rubber compositions includes from 1 to 10 phr, alternatively 2 to 5 phr, of a surface-functionalized carbon allotrope. Suitable carbon allotropes include single-walled carbon nanotubes, multi-walled carbon nanotubes, graphene and fullerenes. Suitable surface-functionalized carbon nanotubes may be produced, for example, as taught in US-B-9,353,240, US-B-9,636,649, and US-A-2019/0161350.

In one embodiment, the carbon allotrope is carbon nanotubes.

In this application, a reference to a carbon nanotube means carbon tubes having a diameter in a range of from 0.4 to 50 nm, more preferably 2 to 40 nm, and a length in a range of from 0.14 nm to 0.5 m.

Preferably, the length of the carbon nanotube is in a range of from 100 nm to 10 cm or from 1000 nm to 10 cm.

The aspect ratio of the carbon nanotubes used in this application, i.e. the length-to-diameter ratio, is preferably above 100, more preferably above 1000, above 10000 or even above 1000000.

In one embodiment, the carbon nanotubes comprise a plurality of carbon nanotubes comprising single wall, double wall or multi wall carbon nanotube fibers preferably having an aspect ratio of from 10 to 500, more preferably from 60 to 200, and preferably a surface oxidation level of from 1 to 15 weight percent, alternatively 3 weight percent to 15 weight percent, alternatively from 1 to 10 weight percent, alternatively from 5 weight percent to 10 weight percent, alternatively from 1 to 5 weight percent, alternatively from 1 to 3 weight percent.

The oxidation level is defined as the amount by weight of oxygenated species covalently bound to the carbon nanotube, thus in this embodiment the oxygenated species represent the surface functionalization.

The thermogravimetric method for the determination of the percent weight of oxygenated species on the carbon nanotube involves taking about 5 mg of the dried oxidized carbon nanotube and heating at 5°C/minute from room temperature to 1000 degrees centigrade in a dry nitrogen atmosphere. The percentage weight loss from 200 to 600 degrees centigrade is taken as the percent weight loss of oxygenated species. The oxygenated species can also be quantified using fourier transform infra-red spectroscopy, FTIR, particularly in the wavelength range 1730-1680 cm⁻¹.

The carbon nanotube fibers can have oxidation species comprising of carboxylic acid or derivative carbonyl containing species and are essentially discrete individual fibers, not entangled as a mass. The derivative carbonyl species can include phenols, ketones, quaternary amines, amides, esters, acyl halogens, monovalent metal salts and the like. Alternatively, or in addition, the carbon nanotubes may comprise an oxidation species selected from hydroxyl or derived from hydroxyl containing species.

Suitable surface-functionalized multiwall carbon nanotubes are available commercially as MR 1420X DLC from Molecular Rebar Design LLC (see e.g. Peddini et al., RubberWorld.com, February 2019, p 34-39.)

The rubber composition includes one or more rubbers or elastomers containing olefinic unsaturation.

The phrases "rubber or elastomer containing olefinic unsaturation" or "diene based elastomer" are intended to include both natural rubber and its various raw and reclaim forms as well as various synthetic rubbers.

In the description of this invention, the terms "rubber" and "elastomer" may be used interchangeably, unless otherwise prescribed.

The terms "rubber composition," "compounded rubber" and "rubber compound" are used interchangeably to refer to rubber which has been blended or mixed with various ingredients and materials and such terms are well known to those having skill in the rubber mixing or rubber compounding art.

The terms "vulcanized" and "cured" may be used interchangeably, as well as "unvulcanized" or "uncured", unless otherwise indicated.

Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Further examples of functionalized elastomers may be used, including functionalized version of polybutadiene, polyisoprene and styrene-butadiene rubbers. The preferred rubber or elastomers are polyisoprene (natural or synthetic), polybutadiene and SBR.

In one aspect the use of at least one additional rubber is preferably of at least two diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may from 0 to 40 phr of silica; alternatively, from 0 to 30 phr, alternatively, from 0 to 20 phr, from 0 to 10, or from 0 to 5 phr of silica may be used. In one embodiment, the rubber composition excludes silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N120, N121, N134, N191N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 210 g/kg and DBP number ranging from 34 to 150 cm³/100g.

In one embodiment the rubber composition contains from 50 to 300 parts by weight, alternatively 100 to 250 parts by weight, per 100 parts by weight of surface-functionalized carbon allotrope, of a sulfur containing organosilicon compound. In one embodiment, the sulfur containing organosilicon compounds include bis(trialkoxysilylalkyl) polysulfides. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include mercaptosilanes and blocked mercaptosilanes. In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Examples

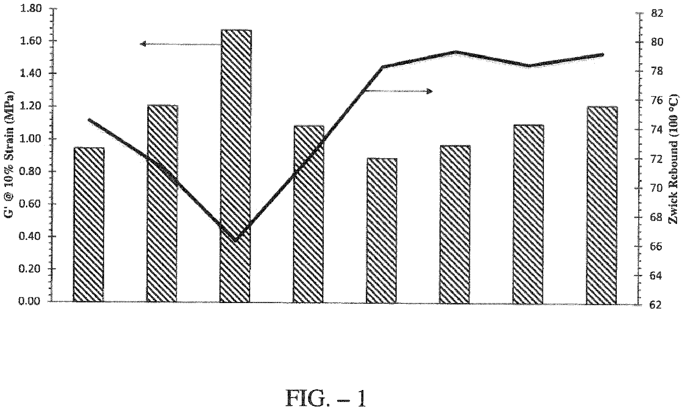

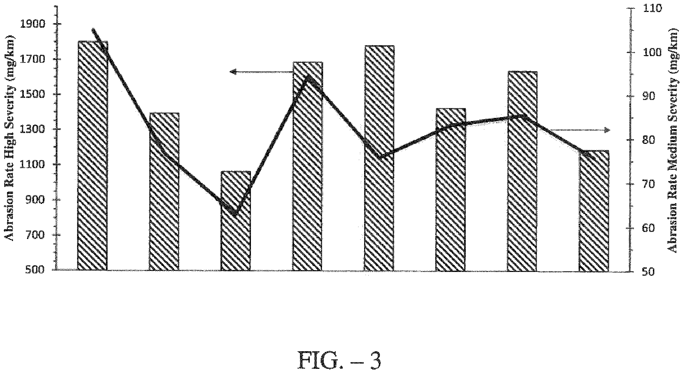

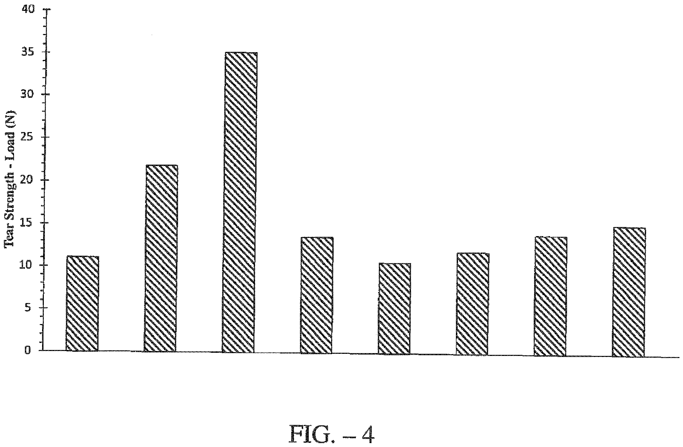

A series of rubber compounds were mixed in a multi-step mix procedure following the compositions given in Tables 1 and 2, with all amounts given in phr. Following curing the compound samples were tested for various physical properties, with results shown in FIGS. 1-4. Tire performance indices based on several of the physical properties are given in Table 3.

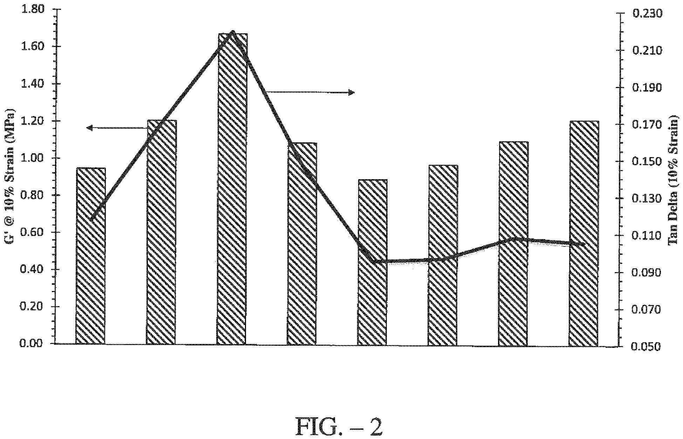

Viscoelastic properties (G' and tan delta) were measured using an ARES Rotational Rheometer rubber analysis instrument which is an instrument for determining various viscoelastic properties of rubber samples, including their storage modulii (G') over a range of frequencies and temperatures in torsion. In FIGS. 1 and 2, G' is given as measured at 10% strain and a frequency of 10 Hz at 30 °C. Generally, a higher G' indicates a better handling performance for a tire containing the given compound. In FIG. 2 tan delta is given as measured at 10% strain and a frequency of 10 Hz at 30 °C. Generally, a lower tan delta indicates a lower rolling resistance in a tire containing the given compound.

Rebound is a measure of hysteresis of the compound when subject to loading, as measured by ASTM D1054. In FIG. 1 the rebound is given as measured at 100 °C. Generally, the higher the measured rebound at 100 °C, the lower the rolling resistance in a tire containing the given compound.

Abrasion was determined as Grosch abrasion rate as run on a LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters.

Tear strength was determined following ASTM D4393 except that a sample width of 2.5 cm is used and a clear Mylar 15 plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area.

**Table 1**

| | |
|---|---|
| Polybutadiene Rubber ¹ | 40 |
| Styrene-Butadiene Rubber ² | 60 |
| Carbon Black | variable as per Table 2 |
| Carbon Nanotubes (MWCNT) | variable as per Table 2 |

| Silane Disulfide | variable as per Table 2 |
|---|---|
| Waxes ³ | 1.5 |
| Naphthenic Oil | 32 |
| Antidegradants ⁴ | 3.25 |
| Fatty Acids | 5 |
| Zinc Oxide | 1.75 |
| Sulfur | 1.72 |
| Accelerators ⁵ | 4.75 |

| | |
|---|---|
| ¹ Budene 1207, from The Goodyear Tire & Rubber Company ² SLR 4602, from Trinseo ³ Microcrystalline and paraffinic types ⁴ Paraphenylene diamine and dihydroquinoline types ⁵ Sulfenamide and guanidine types | |

**Table 2**

| Sample No. | C1 | C2 | C3 | E1 | C4 | C5 | E2 | E3 |
|---|---|---|---|---|---|---|---|---|
| Carbon Black ⁶ | 40 | 50 | 60 | 40 | 40 | 40 | 40 | 40 |
| MWCNT ⁷ | 0 | 0 | 0 | 2 | 0 | 0 | 2 | 2 |
| Silane Disulfide ⁸ | 0 | 0 | 0 | 0 | 2 | 4 | 2 | 4 |

| | | | | | | | | |
|---|---|---|---|---|---|---|---|---|
| ⁶ N120 ⁷ MR 1420X DC, surface-functionalized multiwall carbon nanotubes (MWCNT) as dispersion of nominally 20% by weight in naphthenic oil (oil content included in total oil reported in Table 1), from Molecular Rebar Design LLC ⁸ bis-triethoxysilylpropyl disulfide as SI 266 from Evonik | | | | | | | | |

**Table 3**

| | C1 | C2 | E1 | C5 | E3 |
|---|---|---|---|---|---|
| Handling Index ⁹ | 100 | 128 | 115 | 103 | 128 |
| Snow Index ¹⁰ | 100 | 146 | 100 | 95 | 109 |
| Wet Index ¹¹ | 100 | 116 | 97 | 99 | 100 |
| Rolling Resistance Index ¹² | 100 | 96 | 97 | 106 | 106 |
| Tear Index ¹³ | 100 | 198 | 123 | 108 | 137 |
| Wear Index ¹⁴ | 100 | 84 | 96 | 85 | 76 |

| | | | | | |
|---|---|---|---|---|---|
| ⁹ Based on G' at 10% strain, higher index value is desirable ¹⁰ Based on G' at -20 °C, higher index value is desirable ¹¹ Based on tan delta at 0 °C, higher index value is desirable ¹² Based on rebound at 100 C, higher index value is desirable ¹³ Based on tear strength, higher value is desirable ¹⁴ Based on medium severity Grosch abrasion, lower value is desirable | | | | | |

As seen in Figures 1-4 and Table 3, the combination of surface-functionalized carbon nanotubes and silane coupling agent shows an increase in stiffness/handling and reduces hysteresis/rolling resistance, which shows a surprising and unexpected breaking of the usual stiffness-hysteresis tradeoff. In fact, the combination of surface-functionalized carbon nanotubes and silane coupling agent results in equivalent stiffness/handling as seen with addition of an extra 10 phr of carbon black to a non-nanotube containing compound, with reduced hysteresis/rolling resistance. The combination of surface functionalized carbon nanotubes with silane coupling agent further shows an equivalent stiffness/handling as surface-functionalized carbon nanotubes without silane coupling agent, but with reduced hysteresis/rolling resistance. The combination of surface functionalized carbon nanotubes and silane coupling agent shows improved abrasion resistance: the combination shows equivalent to better abrasion resistance as compared with an added 10 phr of carbon black.

The combination of surface functionalized carbon nanotubes and silane coupling agent provides equal to better tear resistance: equivalent wear for the combination as compared with an additional 10 phr of carbon black, but with reduced hysteresis/rolling resistance. The combination of surface-functionalized carbon nanotubes and silane coupling agent thus breaks the compound of the usual wear-hysteresis tradeoff.

## Claims

1. A vulcanizable rubber composition comprising, based on parts by weight per 100 parts by weight elastomer (phr):
100 phr of at least one diene-based elastomer;
from 20 to 80 phr of a carbon black;
from 0 to 40 phr of a silica;
from 1 to 10 phr of a surface-functionalized carbon allotrope selected from the group consisting of carbon nanotubes, graphene, and fullerenes; and
from 50 to 300 parts by weight of a sulfur-containing organosilane per 100 parts by weight of the surface-functionalized carbon allotrope.

2. The vulcanized rubber composition of claim 1, wherein the carbon allotrope is a carbon nanotube selected from the group consisting of single-walled carbon nanotubes and multi-walled carbon nanotubes.

3. The vulcanizable rubber composition of claim 2, and wherein the surface-functionalized carbon nanotubes comprise an oxidation level of from 1 to 15 weight percent, alternatively of from 3 weight percent to 15 weight percent or of from 1 to 10 weight percent.

4. The vulcanizable rubber composition of claim 2, and wherein the surface-functionalized carbon nanotubes comprise an oxidation level of from 5 weight percent to 10 weight percent.

5. The vulcanizable rubber composition of claim 2, and wherein the surface-functionalized carbon nanotubes comprise an oxidation level of from 1 to 5 weight percent or from 1 to 3 weight percent.

6. The vulcanizable rubber composition of at least one of the previous claims, wherein the surface-functionalized carbon nanotubes comprise surface oxidation species selected from the group consisting of carboxylic acid or derivative carbonyl containing species.

7. The vulcanizable rubber composition of at least one of the previous claims, wherein the surface-functionalized carbon nanotubes comprise surface oxidation species selected from the group consisting of phenols, ketones, quaternary amines, amides, esters, acyl halogens, monovalent metal salts, hydroxyl and hydroxyl derivative species.

8. The vulcanizable rubber composition of at least one of the previous claims, wherein the amount of silica ranges from 0 to 30 phr or from 0 to 20 phr.

9. The vulcanizable rubber composition of at least one of the previous claims, wherein the amount of silica ranges from 0 to 10 phr or from 0 to 5 phr.

10. The vulcanizable rubber composition of at least one of the previous claims, wherein the rubber composition is exclusive of silica.

11. The vulcanizable rubber composition of at least one of the previous claims, wherein the sulfur-containing organosilane is selected from bis(trialkoxysilylalkyl) polysulfides, mercaptosilanes, and blocked mercaptosilanes.

12. The vulcanizable rubber composition of at least one of the previous claims, wherein the sulfur containing organosilicon compounds is selected from the group consisting of 3,3'-bis(triethoxysilylpropyl) disulfide, 3,3'-bis(triethoxysilylpropyl) tetrasulfide and 3-(octanoylthio)-1-propyltriethoxysilane.

13. The vulcanizable rubber composition of at least one of the previous claims, wherein the diene-based elastomer is selected from styrene-butadiene rubbers, polybutadiene rubbers, natural rubbers, synthetic polyisoprenes, and functionalized versions thereof.

14. A tire comprising the rubber composition of at least one of the previous claims as a vulcanized rubber composition.

15. The tire of claim 14, wherein the tire is a pneumatic tire having a tread, said tread preferably comprising said vulcanized rubber composition.
